(19) 

Europäisches
Patentamt
European
Patent Office
Office européen
des brevets

(11) **EP 2 753 059 A1**

(12) # EUROPEAN PATENT APPLICATION
published in accordance with Art. 153(4) EPC

(43) Date of publication:
**09.07.2014 Bulletin 2014/28**

(21) Application number: **12827485.9**

(22) Date of filing: **28.08.2012**

(51) Int Cl.:
*H04N 1/56* (2006.01)  *H04N 1/60* (2006.01)

(86) International application number:
**PCT/CN2012/080661**

(87) International publication number:
**WO 2013/029528 (07.03.2013 Gazette 2013/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2011 CN 201110254162
06.07.2012 CN 201210235897**

(71) Applicant: **TYPONTEQ Co., Ltd
Beijing 100085 (CN)**

(72) Inventor: **JIA, Wei
Beijing 100085 (CN)**

(74) Representative: **Gille Hrabal
Brucknerstrasse 20
40593 Düsseldorf (DE)**

(54) **COLOR PROCESSING METHOD BASED ON HG1C1 COLOR SPACE**

(57) The invention discloses a method for processing color data based on an HGlCl color space with a color appearance attribute. The method comprises: acquiring color data in an HGlCl format in the HGlCl color space with a color appearance attribute; selecting two color data in the HGlCl format from the acquired color data in the HGlCl format; performing a color addition and/or color difference operation on the selected two color data in the HGlCl format to generate one color data in the HGlCl format. The method further comprises converting the color data in the HGlCl format generated by the operation into color data in a CIE XYZ format. By the method of the invention, color error judgment, and color prediction and matching and compensation can be conveniently performed. Besides, the conversion calculating process in the invention is accurate, simple and fast in the conversion speed.

Fig. 3

Printed by Jouve, 75001 PARIS (FR)

## Description

## Technical Field

The invention relates to photometry application technology, and in particular to a color processing method based on an HGICI color space with a color appearance attribute.

## Background Art

A calculation of color addition and a calculation of a color difference between colors are important parts in calculations in photometry and its application, and are widely applied in industry, art and digital images.

The existing calculations of color addition are all performed by converting the color data from the existing color spaces such as CIELAB and CIELUV to the CIEXYZ color space, the superimposition cannot be directly performed in the CIELAB and CIELUV spaces, and the conversion relationship during the conversion is very complicated, which is shown in the below formula:

$$
\begin{cases}
L = 116 \left( \dfrac{Y}{Y_0} \right)^{\frac{1}{3}} - 161 \\[2mm]
a = 500 \left[ \left( \dfrac{X}{X_0} \right)^{\frac{1}{3}} - \left( \dfrac{Y}{Y_0} \right)^{\frac{1}{3}} \right] \\[2mm]
b = 200 \left[ \left( \dfrac{Y}{Y_0} \right)^{\frac{1}{3}} - \left( \dfrac{Z}{Z_0} \right)^{\frac{1}{3}} \right]
\end{cases}
\text{; under a light source } D_{65}
\begin{cases}
X_0 = 95.045 \\
Y_0 = 100 \\
Z_0 = 108.255
\end{cases}
$$

The result of the color addition is obtained after performing a superimposition calculation in the CIEXYZ color space, and then the calculated data is converted to the color space CIELAB or CIELUV to be observed or applied. Such method is very troublesome, and meanwhile the above conversion formula is a fitted one, a problem of precision is also brought.

The existing definition of the color difference is a numerical difference, and can be calculated in various color spaces, e.g., the color difference in the CIELAB color space is a scalar numerical value, which is calculated in the following manner:

$$
\Delta E = \sqrt{(\Delta L)^2 + (\Delta a)^2 + (\Delta b)^2} \text{, where } \Delta L = L_1 - L_2, \Delta a = a_1 - a_2, \Delta b = b_1 - b_2
$$

This numerical value only indicates the value of the color difference and does not indicate a deeper attribute of the color difference, and thus cannot provide a basis for color compensation. It is considered in the new theory that the color difference is also essentially a color and also has its attributes of hue, intensity and degree of saturation. It is imprecise to describe the color difference by simply using a numerical difference, and the color difference should be described using a color.

The CIEXYZ color space is a basic color space in colorimetry and is a basis for describing other color spaces, and the color data in the CIEXYZ color space can be converted to any other color space, e.g., CIELAB and the like. However, for the newly defined color space HGICI, there does not exist an existing calculation to perform conversion.

Thus, there exists a requirement for a method capable of processing color addition and color difference in a new color space in the prior art.

## Summary of the Invention

With respect to the existing technical defects, the invention overcomes the defects in the prior art by processing color data based on an HGICI color space with a color appearance attribute, achieves direct colored light superimposition and color difference calculations in a color appearance color space, and can obtain more explicitly information of the color difference accurate to three dimensions.

The invention puts forward a mutual conversion method of color data between the CIEXYZ color space and the HGICI color space, and the conversion method is described in Formula 1 and Formula 2 below.

According to the invention, the color space HGICI with a color appearance attribute is a color space based on a CIEXYZ Cartesian color space, of a color appearance attribute and described by a cylindrical coordinate system; the cylindrical coordinate system is composed of a chromatic plane and a gray axis passing through the origin of the chromatic plane and perpendicular to the chromatic plane, the gray axis describes a gray level of the color, the chromatic plane is a polar coordinate plane and describes a chromatic vector $\vec{Cl}$ of the color, and the chromatic vector is a vector parallel to the chromatic plane and is composed of a vector polar angle and a vector polar radius expressed within a polar coordinate system, wherein the vector polar angle is a hue angle H of the chromatic vector, and the vector polar radius is a chromatic level Cl of the chromatic vector, i.e., one color C is $C=(Gl, \vec{Cl})=(H, Gl, Cl)$ within the HGICI color space with a color appearance attribute;

wherein the chromatic plane is a plane of the CIEXYZ Cartesian color space X+Y+Z=K, and K is a real constant; the axes XYZ of the CIEXYZ Cartesian color space are projected on a plane X+Y+Z=K in a direction of a line X=Y=Z to obtain three projection axes which are at 120° with respect to one another within the chromatic plane, and a unit vector in the direction of the projection axis is $\vec{i}$, $\vec{j}$, $\vec{k}$; the data of the color C (X, Y, Z) in the CIEXYZ color space within the chromatic plane is expressed as $C$ ($X\vec{i}$, $Y\vec{j}$, $Z\vec{k}$), wherein X, Y and Z are respectively amplitudes in the three directions $\vec{i}$, $\vec{j}$, $\vec{k}$, and the polar angles $\vec{i}$, $\vec{j}$, $\vec{k}$ are respectivley 0°, 120° and 240°;

wherein the conversion manner from the CIE XYZ color space to the HGICI color space is given in Formula 1:

$$\begin{cases} Gl = Min(X,Y,Z) \\ \vec{Cl} = X\vec{i}+Y\vec{j}+Z\vec{k} \\ Cl = \left|X\vec{i}+Y\vec{j}+Z\vec{k}\right| \\ H = \begin{cases} \arccos\left(\dfrac{2X-Y-Z}{2\sqrt{(X-Y)^2+(Y-Z)^2+(X-Y)(Y-Z)}}\right), & Y \geq Z \\ 2\pi - \arccos\left(\dfrac{2X-Y-Z}{2\sqrt{(X-Y)^2+(Y-Z)^2+(X-Y)(Y-Z)}}\right), & Y < Z \\ \text{undefined}, & X = Y = Z \end{cases} \end{cases}$$ (Formula 1)

in the formula, Min (X, Y, Z) is the minimum value of X, Y and Z.

In the invention, the color data are numerical values of the color attribute of the colored light, e.g., tristimulus values X, Y, Z or numerical values of hue, intensity and degree of saturation and the like of the colored light; the color is the visual stimulation of the colored light; the gray precipitation refers to that a white light is produced when two different colors are mixed, the process of generating the white light is called gray precipitation, and the gray value obtained by the gray precipitation is a gray precipitation value.

According to one aspect of the invention, a method of processing color data based on an HGICI color space with a color appearance attribute is provided, the method comprising: acquiring color data in an HGICI format in the HGICI color space with a color appearance attribute; selecting two color data in the HGICI format from the acquired color data in the HGICI format; performing a color addition and/or color difference operation on the selected two color data in the HGICI format to acquire one color data in the HGICI format generated by the operation.

According to another aspect of the invention, a method of processing color data based on an HGICI color space with a color appearance attribute is provided, the method comprising: acquiring color data in an XYZ format of interest in a CIE XYZ color space; converting the acquired color data in the XYZ format into color data in a HGICI format according to Formula 1.

Accordingly to a further aspect of the invention, a method for processing color data based on an HGICI color space with a color appearance attribute is provided, the method comprising: acquiring color data in an HGICI format of interest in the HGICI color space; converting the acquired color data in the HGICI format into color data in an XYZ format according to Formula 2:

3

$$h=[\frac{H}{120°}], \quad [\bullet] \text{ is a round symbol with respect to } \bullet, \quad H\in[0°,360°), h=0,1,2$$

$$\begin{cases} \text{if } h=0, \\ X=Cl\left[\cos(H)+\frac{\sqrt{3}}{3}\sin(H)\right]+Gl, \\ Y=\frac{2\sqrt{3}}{3}Cl\sin(H)+Gl, \\ Z=Gl \end{cases} \quad \begin{cases} \text{if } h=1, \\ X=Gl \\ Y=Gl-Cl\cos(H)+\frac{\sqrt{3}}{3}\left|\vec{Cl}\right|\times\sin(H), \\ Z=Gl-Cl\cos(H)-\frac{\sqrt{3}}{3}\left|\vec{Cl}\right|\times\sin(H) \end{cases} \quad \begin{cases} \text{if } h=2 \\ X=Cl\left[\cos(H)-\frac{\sqrt{3}}{3}\sin(H)\right]+Gl \\ Y=Gl \\ Z=Gl-\frac{2\sqrt{3}Cl\sin(H)}{3} \end{cases} \text{ (Formula 2).}$$

The invention puts forward a color processing method in an HGICI color space, and has advantages of directly performing calculations in a color appearance space and describing and calculating a color difference more precisely.

Based on the requirement for more precise descriptions of the color difference, the invention puts forward performing a calculation using a calculating method capable of describing explicit differences of the colors in three dimensions, i.e., hue, intensity and degree of saturation, and obtains precise descriptions of the color difference of the colors, and thus can provide a precise adjustment basis for the color compensation.

**Brief Description of the Drawings**

Fig. 1 is a schematic diagram of the construction of the HGICI color space on which the invention depends;

Fig. 2 is a schematic diagram of the unit vector $\vec{i}$, $\vec{j}$, $\vec{k}$ of the chromatic plane and the trisected chromatic plane;

Fig. 3 is a schematic diagram of the HGICI color space on which the invention depends;

Fig. 4 is a schematic diagram of the equivalent CI plane of the HGICI space;

Fig. 5 is a schematic diagram of the cross section of the HGICI color space passing though the gray axis;

Fig. 6 is a flow chart of the color processing method based on the HGICI color space according to one embodiment of the invention;

Fig. 7 is a flow chart of acquiring the color data in the HGICI format in the HGICI color space with a color appearance attribute according to the invention.

**Detailed Description**

Further detailed descriptions of the specific implementation modes of the invention are given below by taking the figures and the embodiments into consideration. The embodiments below are used for describing the invention rather than limiting the invention.

According to the embodiments of the invention, the calculation of the color addition and the calculation of the difference between the colors can be directly performed in the HGICI color space with a color appearance attribute, and color difference description information including three dimensions, i.e., hue, intensity and degree of saturation, is calculated.

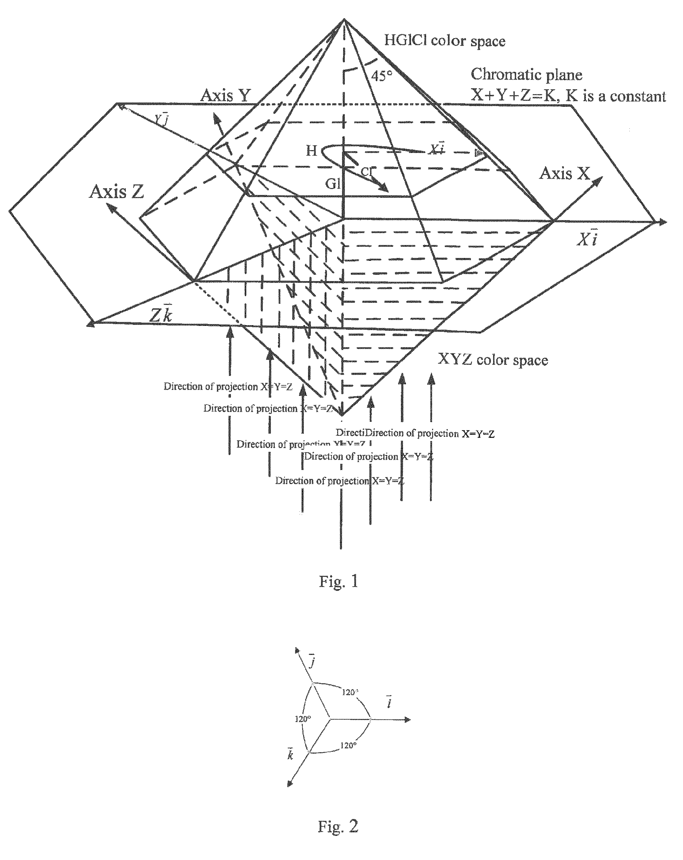

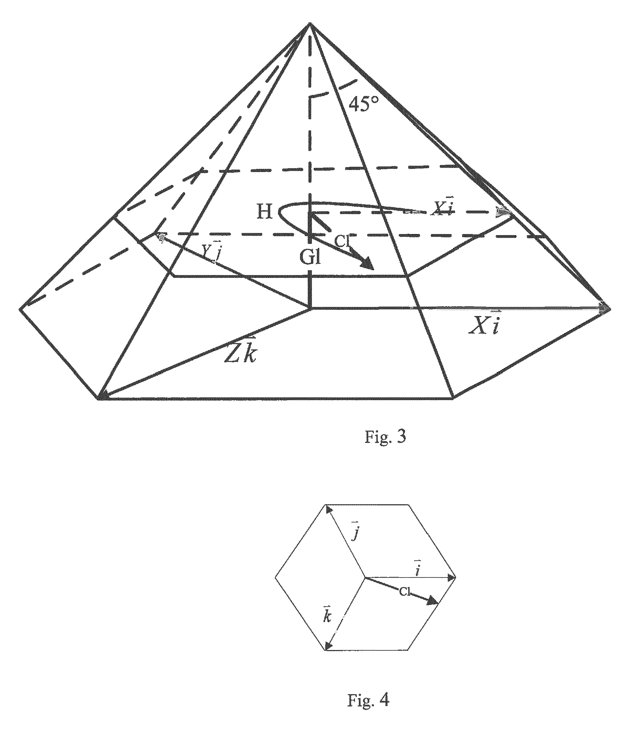

Figs. 1-5 show the HGICI color space used according to the invention. It can be seen from Fig. 1 that the HGICI color space is a color space based on a CIE XYZ Cartesian color space, of a color appearance attribute and described by a cylindrical coordinate system; the cylindrical coordinate system is composed of a chromatic plane and a gray axis passing through the origin of the chromatic plane and perpendicular to the chromatic plane, and the gray axis describes a gray level of the color; the chromatic plane is a polar coordinate plane and describes a chromatic vector $\vec{Cl}$ of the color, and the chromatic vector is a vector parallel to the chromatic plane and is composed of a vector polar angle and a vector polar radius expressed within a polar coordinate system; wherein the vector polar angle describes a hue angle H of the chromatic vector, and the vector polar radius describes a chromatic level Cl of the chromatic vector. Thus, one color C can be expressed as $C=(Gl, \vec{Cl})=(H, Gl, Cl)$ within the HGICI color space.

The chromatic plane is a plane of the CIE XYZ Cartesian color space X+Y+Z=K, and K is a real constant; the axes XYZ of the CIE XYZ Cartesian color space are projected on a plane X+Y+Z=K in a direction of a line X=Y=Z to obtain three projection axes which are at 120° with respect to one another within the chromatic plane, and a unit vector in the direction of the projection axis is $\vec{i}$, $\vec{j}$, $\vec{k}$; $\overline{k}$; the chromatic plane is divided into three areas in three vector directions $\vec{i}$, $\vec{j}$, $\vec{k}$, which are at 120° with respect to one another, starting from the origin within the chromatic plane; after performing normalized corresponding processing with respect to the unit coordinate and the unit vector $\vec{i}$, $\overline{i}$, $\vec{j}$, $\vec{k}$ of the CIEXYZ color space, data of one color C (X, Y, Z) in the CIEXYZ color space within the chromatic plane can be expressed as $C(X\vec{i}, Y\vec{j}, Z\vec{k})$, $Z\overline{k}$), wherein X, Y and Z are respectively amplitudes in the three directions $\vec{i}$, $\overline{i}$, $\vec{j}$, $\vec{k}$, and the polar angles $\vec{i}$, $\overline{i}$, $\vec{j}$, $\vec{k}$ are respectivley 0°, 120° and 240°.

Tristimulus values of one color C in the CIE XYZ color space are X, Y and Z, which respectively. express numerical values of the CIE XYZ color space on the coordinate axes X, Y, Z, i.e., C=(X, Y, Z);
in the HGICI color space, the following relationship exists between the color data in the HGICI format of one color and the color data in the XYZ format of this color in the CIE XYZ space:

$$
\begin{cases}
Gl = Min(X, Y, Z) \\
\vec{Cl} = X\vec{i} + Y\vec{j} + Z\vec{k} \\
Cl = \left| X\vec{i} + Y\vec{j} + Z\vec{k} \right| \\
H = \begin{cases}
\arccos\left( \dfrac{2X - Y - Z}{2\sqrt{(X-Y)^2 + (Y-Z)^2 + (X-Y)(Y-Z)}} \right), & Y \geq Z \\
2\pi - \arccos\left( \dfrac{2X - Y - Z}{2\sqrt{(X-Y)^2 + (Y-Z)^2 + (X-Y)(Y-Z)}} \right), & Y < Z \\
\text{undefined}, & X = Y = Z
\end{cases}
\end{cases}
\qquad \text{(Formula 1)}
$$

in the formula, Min (X, Y, Z) is the minimum value of X, Y and Z; the color C is C=(X, Y, Z) in the CIE XYZ color space, is $C(X\vec{i}, Y\vec{j}, Z\vec{k})$ within a pure chromatic polar coordinate plane, and is a number pair $C = (Gl, \vec{Cl}) = (Gl, (Cl, H))$ within the HGICI color space.

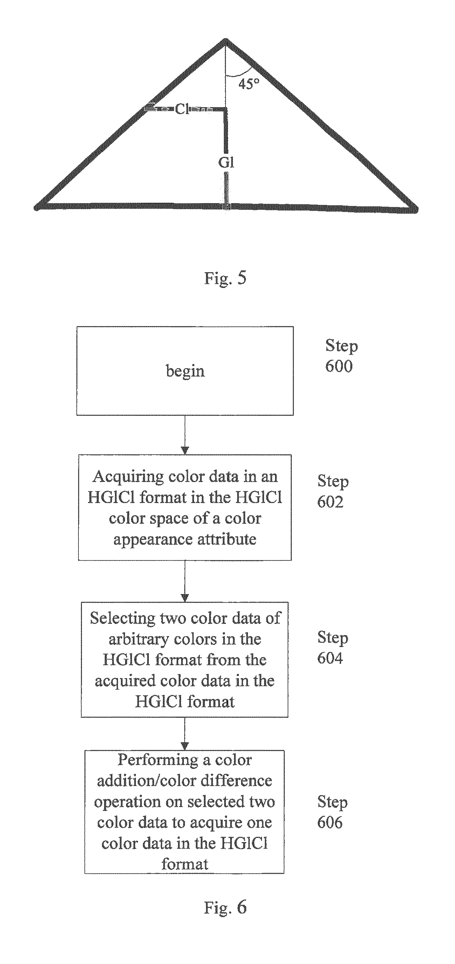

Fig. 6 shows a method of performing color processing based on an HGICI color space with a color appearance attribute according to one embodiment of the invention. As shown in Fig. 6, the flow starts from Step 600. In Step 602, color data in an HGICI format in the HGICI color space with a color appearance attribute is acquired. After the color data in the HGICI format is acquired, two color data of arbitrary colors in the HGICI format are selected from the acquired color data in the HGICI format (Step 604). Next, in Step 606, a color addition and/or color difference operation is performed with respect to the selected two color data in the HGICI format to acquire one color data in the HGICI format generated by the operation.

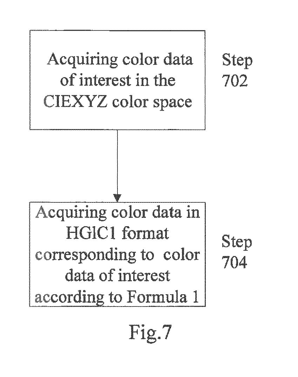

In Step 602, the user uses multiple methods to achieve the color data in the HGICI format in the HGICI color space with a color appearance attribute. For example, the user can directly specify a plurality of color data in the HGICI format of interest in the HGICI color space with a color appearance attribute. Further, for example, Fig. 7 shows another manner of acquiring the color data in the HGICI format in the HGICI color space with a color appearance attribute. Specifically, in Step 702, color data of interest in the CIEXYZ color space is acquired. In Step 704, color data in the HGICI format corresponding to the color data of interest are acquired according to Formula 1, respectively.

In Step 702, there are multiple manners to acquire the color data of interest in the CIEXYZ color space. For example, the user can directly specify the color data in the XYZ format of interest in the CIEXYZ color space.

Optionally, the color data of interest in the CIEXYZ color space can be also acquired in the manner below. Conversion of a physical color in an RGB format to the CIE XYZ color space can be performed by adopting a conversion method in the prior art, and thus details are omitted herein.

The specific process of performing a color addition and/or color difference operation with respect to the selected two color data in the HGICI format to acquire one color data in the HGICI format produced by the operation in Step 606 is described in detail below.

Firstly, the color addition in the HGICl color space is described. It is assumed that the selected two color data in the HGICl format are respectively $C_1=(H_1, Gl_1, Cl_1)$ and $C_2=(H_2, Gl_2, Cl_2)$, and the color data in the HGICl format generated by the operation is $C_3=(H_3, Gl_3, Cl_3)$.

Color addition can be performed with respect to two colors $C_1$, $C_2$ to obtain the color $C_3$ after the addition operation by the following steps:

acquiring a gray precipitation value $Gl_{cl1cl2}$ after vector addition of chromatic vectors $\overrightarrow{Cl_1}$, $\overrightarrow{Cl_2}$ of the two colors $C_1$, $C_2$ by Formula 3 below:

$$h_1 = [\frac{H_1}{120^\circ}], \quad h_2 = [\frac{H_2}{120^\circ}], \quad [\bullet] \text{ is a round symbol with respect to } \bullet, \quad H_1, H_2 \in [0^\circ, 360^\circ)$$

$$Gl_{cl_1cl_2} = \begin{cases} 0, & h_1 \wedge h_2 = 0 \\ Gl_{mix}, & h_1 \wedge h_2 = 1 \end{cases}$$

$$Gl_{mix} = \begin{cases} \min(\dfrac{\sin(120^\circ - H_1)}{\sin(60^\circ)}Cl_1, \dfrac{\sin(H_1)}{\sin(60^\circ)}Cl_1 + \dfrac{\sin(240^\circ - H_2)}{\sin(60^\circ)}Cl_2, \dfrac{\sin(H_2 - 120^\circ)}{\sin(60^\circ)}Cl_2), & h_1 = 0, h_2 = 1; \\ \min(\dfrac{\sin(120^\circ - H_1)}{\sin(60^\circ)}Cl_1 + \dfrac{\sin(H_2 - 240^\circ)}{\sin(60^\circ)}Cl_2, \dfrac{\sin(H_1)}{\sin(60^\circ)}Cl_1, \dfrac{\sin(360^\circ - H_2)}{\sin(60^\circ)}Cl_2), & h1 = 0, h2 = 2 \\ \min(\dfrac{\sin(H_2 - 240^\circ)}{\sin(60^\circ)}Cl_2, \dfrac{\sin(240^\circ - H_1)}{\sin(60^\circ)}Cl_1, \dfrac{\sin(H_1 - 120^\circ)}{\sin(60^\circ)}Cl_1 + \dfrac{\sin(360^\circ - H_2)}{\sin(60^\circ)}Cl_2), & h1 = 1, h2 = 2 \end{cases}$$ (Formula3);

acquiring H, Gl and Cl values $C_3$ ($H_3$, $Gl_3$, $Cl_3$) in the HGICl format of the color data $C_3$ by Formula 4 below and the gray precipitation value $Gl_{cl1cl2}$ after the vector addition of the chromatic vectors $\overrightarrow{Cl_1}$, $\overrightarrow{Cl_2}$ of the two colors $C_1$, $C_2$:

$$\begin{cases} Gl_3 = Gl_2 + Gl_1 + Gl_{cl_1cl_2} \\ Cl_3 = \sqrt{Cl_1^2 + Cl_2^2 + 2Cl_1 \times Cl_2 \times \cos(H_1 - H_2)} \\ H_3 = \begin{cases} \arccos(\dfrac{Cl_1 \times \cos(H_1) + Cl_2 \times \cos(H_2)}{Cl_3}), & \dfrac{Cl_1 \times \sin(H_1) + Cl_2 \times \sin(H_2)}{Cl_1 \times \cos(H_1) + Cl_2 \times \cos(H_2)} \geq 0 \\ 2\pi - \arccos(\dfrac{Cl_1 \times \cos(H_1) + Cl_2 \times \cos(H_2)}{Cl_3}), & \dfrac{Cl_1 \times \sin(H_1) + Cl_2 \times \sin(H_2)}{Cl_1 \times \cos(H_1) + Cl_2 \times \cos(H_2)} < 0 \end{cases} \end{cases}$$ (Formula 4).

Next, the color difference operation in the HGICl color space is described. It is assumed that the selected two color data in the HGICl format are respectively $C_4=(H_4, Gl_4, Cl_4)$ and $C_5=(H_5, Gl_5, Cl_5)$, and the color data in the HGICl format generated by the operation is $C_6=(H_6, Gl_6, Cl_6)$.

A color difference operation can be performed with respect to two colors $C_4$, $C_5$ to obtain the color $C_6$ after the color difference operation by the following steps:

acquiring a color difference $C_6=(H_6, Gl_6, Cl_6)$ of the color $C_4=(H_4, Gl_4, Cl_4)$ relative to the color $C_5=(H_5, Gl_5, Cl_5)$ in the HGICl color space by the following steps:

acquiring a gray precipitation value $Gl_{cl4cl5}$ after vector addition of chromatic vectors $\overrightarrow{Cl_4}$, $\overrightarrow{Cl_5}$ of the two colors $C_4$, $C_5$ by Formula 5 below:

$$h_4 = [\frac{H_4}{120^\circ}],\ h_5 = [\frac{H_5}{120^\circ}],\ [\ast]\ \text{is a round symbol with respect to } \ast,\ H_4, H_5 \in [0^\circ, 360^\circ)$$

$$Gl_{ch_4 ch_5} = \begin{cases} Gl_{sd}, & h_4 \wedge h_5 = 0 \\ Gl_{mix}, & h_4 \wedge h_5 = 1 \end{cases}$$

$$Gl_{sd} = \begin{cases} \min(\dfrac{\sin(120^\circ - H_4)}{\sin(60^\circ)}Cl_4 - \dfrac{\sin(120^\circ - H_5)}{\sin(60^\circ)}Cl_5, \dfrac{\sin(H_4)}{\sin(60^\circ)}Cl_4 - \dfrac{\sin(H_5)}{\sin(60^\circ)}Cl_5, 0), & h_4 = h_5 = 0 \\[2mm] \min(0, \dfrac{\sin(240^\circ - H_4)}{\sin(60^\circ)}Cl_4 - \dfrac{\sin(240^\circ - H_5)}{\sin(60^\circ)}Cl_5, \dfrac{\sin(H_4 - 120^\circ)}{\sin(60^\circ)}Cl_4 - \dfrac{\sin(H_5 - 120^\circ)}{\sin(60^\circ)}Cl_5), & h_4 = h_5 = 1 \\[2mm] \min(\dfrac{\sin(H_4 - 240^\circ)}{\sin(60^\circ)}Cl_4 - \dfrac{\sin(H_5 - 240^\circ)}{\sin(60^\circ)}Cl_5, 0, \dfrac{\sin(360^\circ - H_4)}{\sin(60^\circ)}Cl_4 - \dfrac{\sin(360^\circ - H_5)}{\sin(60^\circ)}Cl_5), & h_4 = h_5 = 2 \end{cases}$$

(Formula 5);

$$Gl_{mix} = \begin{cases} \min(\dfrac{\sin(120^\circ - H_4)}{\sin(60^\circ)}Cl_4, \dfrac{\sin(H_4)}{\sin(60^\circ)}Cl_4 - \dfrac{\sin(240^\circ - H_5)}{\sin(60^\circ)}Cl_5, -\dfrac{\sin(H_5 - 120^\circ)}{\sin(60^\circ)}Cl_5), & h_4 = 0, h_5 = 1; \\[2mm] \min(\dfrac{\sin(120^\circ - H_4)}{\sin(60^\circ)}Cl_4 - \dfrac{\sin(H_5 - 240^\circ)}{\sin(60^\circ)}Cl_5, \dfrac{\sin(H_4)}{\sin(60^\circ)}Cl_4, -\dfrac{\sin(360^\circ - H_5)}{\sin(60^\circ)}Cl_5), & h_4 = 0, h_5 = 2 \\[2mm] \min(-\dfrac{\sin(H_5 - 240^\circ)}{\sin(60^\circ)}Cl_5, \dfrac{\sin(240^\circ - H_4)}{\sin(60^\circ)}Cl_4, \dfrac{\sin(H_4 - 120^\circ)}{\sin(60^\circ)}Cl_4 - \dfrac{\sin(360^\circ - H_5)}{\sin(60^\circ)}Cl_5), & h_4 = 1, h_5 = 2 \end{cases}$$

acquiring H, Gl and Cl values, i.e., $C_6 = (H_6, Gl_6, Cl_6)$, in the HGICl format of the color data $C_6$ by Formula 6 below and the gray precipitation value $Gl_{cl_4 cl_5}$ after the vector addition of the chromatic vectors $\overrightarrow{Cl_4}$, $\overrightarrow{Cl_5}$ of the two colors $C_4$, $C_5$:

$$\begin{cases} Gl_6 = Gl_5 - Gl_4 + Gl_{cl_4 cl_5}, \\[2mm] |\overrightarrow{Cl_6}| = \sqrt{Cl_4^2 + Cl_5^2 - 2Cl_4 \times Cl_5 \times \cos(H_4 - H_5)} \\[2mm] H_6 = \begin{cases} \arccos(\dfrac{Cl_4 \times \cos(H_4) - Cl_5 \times \cos(H_5)}{Cl_6}), & \dfrac{Cl_4 \times \sin(H_4) - Cl_5 \times \sin(H_5)}{Cl_4 \times \cos(H_4) - Cl_5 \times \cos(H_5)} \geq 0 \\[2mm] 2\pi - \arccos(\dfrac{Cl_4 \times \cos(H_4) - Cl_5 \times \cos(H_5)}{Cl_6}), & \dfrac{Cl_4 \times \sin(H_4) - Cl_5 \times \sin(H_5)}{Cl_4 \times \cos(H_4) - Cl_5 \times \cos(H_5)} < 0 \end{cases} \end{cases}$$

(Formula 6).

In the invention, whether after performing a color addition operation or a color difference operation with respect to the two color data in the HGICl color space, the produced color data in the HGICl format can be deemed as one independent color. The user can further convert the color data in the HGICl format produced by the operation to the CIE XYZ color space by adopting the conversion method of the invention, and further perform the conversion from the CIE XYZ color space to the actual physical color. The conversion from the CIE XYZ color space to the actual physical color can be achieved using the conversion manner in the prior art, and thus details are omitted herein.

Optionally, after Step 606, the color data in the HGICI format produced by the operation can be further converted into the color data in the XYZ format in the CIE XYZ color space (Step 608). It is assumed that the color data in the HGICI format produced by the operation is C (H, GI, CI), which is C (X, Y, Z) after being converted from the HGICI color space to the CIE XYZ color space, and then the color data in the HGICI color space can be converted into the color data in the CIE XYZ color space by Formula 2 below:

$$h=\left[\frac{H}{120^\circ}\right], \quad [\bullet] \text{ is a round symbol with respect to } \bullet, \quad H \in [0^\circ, 360^\circ), h=0, 1, 2$$

$$\begin{cases} \text{if } h=0, \\ X = CI\left[\cos(H)+\frac{\sqrt{3}}{3}\sin(H)\right]+GI, \\ Y = \frac{2\sqrt{3}}{3}CI\sin(H)+GI, \\ Z = GI \end{cases} \begin{cases} \text{if } h=1, \\ X = GI \\ Y = GI - CI\cos(H)+\frac{\sqrt{3}}{3}|CI|\times\sin(H), \\ Z = GI - CI\cos(H)-\frac{\sqrt{3}}{3}|CI|\times\sin(H) \end{cases} \begin{cases} \text{if } h=2 \\ X = CI\left[\cos(H)-\frac{\sqrt{3}}{3}\sin(H)\right]+GI \\ Y = GI \\ Z = GI - \frac{2\sqrt{3}CI\sin(H)}{3} \end{cases} \quad (\text{Formula 2}).$$

According to the second embodiment of the invention, another method of processing color based on an HGICI color space with a color appearance attribute is provided. Firstly, color data (X, Y, Z) of interest is acquired in the CIE XYZ color space. Secondly, the acquired color data (X, Y, Z) of interest is substituted in Formula 1 to obtain the corresponding color data in the HGICI format in the HGICI color space. As mentioned above, the color data in the HGICI format can be processed or not processed in the HGICI color space.

In this embodiment, acquiring color data (X, Y, Z) of interest in the CIE XYZ color space can be as follows: directly selecting the color data of interest in the CIE XYZ color space, or converting the physical color data in the UVW format into the color data in the XYZ format in the CIE XYZ color space to obtain the color data of interest by Formulae 7-14.

In the third embodiment of the invention, a method of performing color processing based on an HGICI color space with a color appearance attribute is provided. Firstly, color data (H, GI, CI) of interest is acquired in the HGICI color space. Obviously, acquiring color data (H, GI, CI) of interest in the HGICI color space can be as follows: directly selecting the color data in the HGICI format of interest in the HGICI color space, or using the color data in the HGICI format obtained in the second embodiment. Secondly, the acquired color data of interest is substituted in Formula 2 to obtain the corresponding color data in the XYZ format in the CIE XYZ color space. As mentioned above, the color data in the HGICI format can be processed or not processed in the HGICI color space.

In the invention, the second embodiment and the third embodiment can be also combined, i.e., the color data in the XYZ format in the CIE XYZ color space being converted into the data color in the HGICI format according to Formula 1 is mixed with the color data in the HGICI format being converted into the color data in the XYZ format in the CIE XYZ color space according to Formula 2 to provide a complete processing process from the CIE XYZ format to the HGICI format and further to the CIE XYZ format.

The contents below verify the color data processing method based on an HGICI color space of the invention by means of experimental data.

1. Verification of color addition based on the HGICI color space

Two groups of random colors are selected using a computer, and the data of the tristimulus values X, Y, Z of the XYZ color space are converted into H, GI, CI in the HGICI color space, which is shown as follows:

Table 1 Data Testseq 1 of three primary colors X, Y, Z and H, GI and CI corresponding thereto

| Testseq1 | | | HGICI Representation of Testseq1 | | |
|---|---|---|---|---|---|
| X | Y | Z | H | GI | CI |
| 190 | 124 | 207 | 5.0409 | 124.0000 | 75.9408 |
| 48 | 111 | 136 | 3.4209 | 48.0000 | 78.5430 |
| 175 | 114 | 89 | 0.2865 | 89.0000 | 76.6225 |
| 47 | 78 | 239 | 4.0378 | 47.0000 | 178.5301 |

(continued)

| Testseq1 | | | HGICI Representation of Testseq1 | | |
|---|---|---|---|---|---|
| X | Y | Z | H | GI | CI |
| 94 | 130 | 223 | 3.9150 | 94.0000 | 115.2953 |
| 160 | 130 | 140 | 5.9497 | 130.0000 | 26.4575 |
| 199 | 208 | 159 | 1.2206 | 159.0000 | 45.1774 |
| 21 | 203 | 150 | 2.8546 | 21.0000 | 162.1327 |
| 237 | 164 | 53 | 0.6423 | 53.0000 | 160.4774 |
| 198 | 97 | 77 | 0.1548 | 77.0000 | 112.3432 |

Table 2 Data Testseq2 of tristimulus values X, Y, Z and H, GI and CI corresponding thereto

| Testseq2 | | | HGICI Representation of Testseq2 | | |
|---|---|---|---|---|---|
| X | Y | Z | H | GI | CI |
| 120 | 110 | 154 | 4.4073 | 110.0000 | 39.9500 |
| 59 | 47 | 181 | 4.2698 | 47.0000 | 128.4212 |
| 215 | 231 | 57 | 1.1305 | 57.0000 | 166.5773 |
| 50 | 250 | 30 | 2.0121 | 30.0000 | 210.7131 |
| 58 | 112 | 76 | 2.4279 | 58.0000 | 47.6235 |
| 44 | 28 | 81 | 4.4875 | 28.0000 | 47.0850 |
| 58 | 66 | 108 | 4.0393 | 58.0000 | 46.5188 |
| 111 | 104 | 130 | 4.4520 | 104.0000 | 23.3024 |
| 79 | 152 | 22 | 1.6417 | 22.0000 | 112.8672 |
| 235 | 67 | 67 | 0 | 67.0000 | 168.0000 |

After respectively performing addition of the tristimulus values X, Y, Z in the corresponding items in Table 1 and Table 2 in the CIEXYZ color space, conversion is made into the HGICI values, and Testseq1+Testseq2 is shown in Table 3 below:

Table 3 Testseq1+Testseq2 and H, GI and CI corresponding thereto

| Testseq1+Testseq2 | | | HGICI color processing results of Testseq1+Testseq2 | | |
|---|---|---|---|---|---|
| X | Y | Z | H | GI | CI |
| 310 | 234 | 361 | 4.8256 | 234.0000 | 110.6933 |
| 107 | 158 | 317 | 3.9538 | 107.0000 | 189.7129 |
| 390 | 345 | 146 | 0.8730 | 146.0000 | 224.9022 |
| 97 | 328 | 269 | 2.8933 | 97.0000 | 207.8774 |
| 152 | 242 | 299 | 3.5363 | 152.0000 | 128.3706 |
| 204 | 158 | 221 | 4.9721 | 158.0000 | 56.4535 |
| 257 | 274 | 267 | 2.7195 | 257.0000 | 14.7986 |
| 132 | 307 | 280 | 2.9978 | 132.0000 | 163.1839 |
| 316 | 316 | 75 | 1.0472 | 75.0000 | 241.0000 |
| 433 | 164 | 144 | 0.0620 | 144.0000 | 279.5371 |

In the HGICI color space, the HGICI numerical values in the corresponding items in Table 1 and Table 2 are taken to undergo addition according to the color addition method in the HGICI color space to obtain the added HGICI values as follows:

Table 4 Color addition processing results of Testseq1 and Testseq2 using the HGICI color space

| H | GI | CI |
|---|---|---|
| 4.8256 | 234.0000 | 110.6933 |
| 3.9538 | 107.0000 | 189.7129 |
| 0.8730 | 146.0000 | 224.9022 |
| 2.8933 | 97.0000 | 207.8774 |
| 3.5363 | 152.0000 | 128.3706 |
| 4.9721 | 158.0000 | 56.4535 |
| 2.7195 | 257.0000 | 14.7986 |
| 2.9978 | 132.0000 | 163.1839 |
| 1.0472 | 75.0000 | 241.0000 |
| 0.0620 | 144.0000 | 279.5371 |

It can be seen by comparing the results in Table 3 and Table 4 that the results of performing color addition according to the HGICI color space in the HGICI color space are completely consistent with the results of directly adding the tristimulus values X, Y, Z in the CIEXYZ color space.

2. Verification of color subtraction based on the HGICI color space

After respectively performing subtraction of the tristimulus values X, Y, Z in the corresponding items in Table 1 and Table 2 in the CIE XYZ color space, conversion is made into the HGICI values, and Testseq1-Testseq2 is shown in Table 4 below:

Table 4 Testseq1-Testseq2 and processing results in the HGICI color space thereof

| Testseq1-Testseq2 | | | HGICI color processing method results of Testseq1-Testseq2 | | |
|---|---|---|---|---|---|
| X | Y | Z | H | GI | CI |
| 70 | 14 | 53 | 5.5365 | 14.0000 | 49.7293 |
| -11 | 64 | -45 | 1.7846 | -45.0000 | 96.5971 |
| -40 | -117 | 32 | 4.7318 | -117.000 | 129.0620 |
| -3 | -172 | 209 | 4.6473 | -172.000 | 330.6554 |
| 36 | 18 | 147 | 4.3180 | 18.0000 | 121.0083 |
| 116 | 102 | 59 | 0.8093 | 59.0000 | 51.4490 |
| 141 | 142 | 51 | 1.0568 | 51.0000 | 90.5041 |
| -90 | 99 | 20 | 2.7124 | -90.0000 | 164.4111 |
| 158 | 12 | 31 | 6.1632 | 12.0000 | 137.4882 |
| -37 | 30 | 10 | 2.8466 | -37.0000 | 59.5735 |

In the HGICI color space, the HGICI values in the corresponding items in Table 1 and Table 2 are taken to undergo a subtraction operation according to the color subtraction method of the HGICI color space to obtain the HGICI color difference values after the subtraction operation as follows:

Table 5

| H | GI | CI |
|---|---|---|
| 5.5365 | 14.0000 | 49.7293 |
| 1.7846 | -45.0000 | 96.5971 |
| 4.7318 | -117.000 | 129.0620 |
| 4.6473 | -172.000 | 330.6554 |
| 4.3180 | 18.0000 | 121.0083 |
| 0.8093 | 59.0000 | 51.4490 |
| 1.0568 | 51.0000 | 90.5041 |
| 2.7124 | -90.0000 | 164.4111 |
| 6.1632 | 12.0000 | 137.4882 |
| 2.8466 | -37.0000 | 59.5735 |

It can be seen by comparing Table 4 and Table 5 that the results of performing color subtraction according to the HGICI color space in the HGICI color space are completely consistent with the results of directly subtracting the tristimulus values X, Y, Z in the CIE XYZ color space.

Especially, when the color difference operation is performed in the HGICI color space, if GI is negative, it indicates that the gray level of the subtracted color Testseq1 is lower than the gray level of the subtracted color Testseq2.

According to the invention, by means of the color addition in the HGICI color space, the result of adding two known colors can be predicted. The prediction represents that the addition result can be obtained by a machine operation, and the result of the machine operation includes three variables H, GI, CI, and these three variables can be subjectively compared with a real operation to obtain unification of the objective operation with the subjective feeling. The traditional color processing method does not possess this function, and people can only perform an inverse operation to the CIEXYZ space from the specific color space used, then obtain the addition result by means of addition of the tristimulus values X, Y, Z, and then further perform a conversion to the specific color space so as to know the subjective visual feeling of the superimposed color.

In the invention, the color difference in the HGICI color space can achieve the error judgment during the production of the target color as the definitions of the other color differences. Specifically, a vector subtraction is performed between the target color and the actually acquired color, whereby the specific value of the value difference can be acquired. For example, it is allowed to deem $C_4=(H_4, GI_4, CI_4)$ as the actually acquired color, and deem $C_5=(H_5, GI_5, CI_5)$ as the target color, and then $(H_6, GI_6, CI_6)$ is the color difference. The color difference production judgment is achieved with the value CI of the subtraction result (the CI is not a vector but a vector module of the color difference $\overline{CI}$) being lower than a certain threshold value.

The color difference and color addition operations in the HGICI color space in the invention can be further applied to the color prediction and color matching. In order to acquire the target color, an existing color is firstly assumed, and then a difference between the target color and the assumed color is made to obtain the hue value of the second color. Thus, when seeking a color for matching, the color to be matched can be obtained by directly performing a calculation. As long as the target color and an assumed color are known, the second color can be obtained, so that the target color is obtained just when the second color is superimposed with the assumed color. The traditional color processing method is still one that can only perform an inverse conversion to a color acceptable by the machine (e.g., the ideal model of three primary colors), then perform an operation to obtain the difference, and then convert the operation result so as to known the result.

It can be seen from the color data processing methods provided by the above respective embodiments that the color processing method based on an HGICI color space in the invention involves simple analytical operations all the time in the conversion calculations, greatly simplifies the conversion calculating process, and improves the conversion efficiency. Particularly, the mutual conversion formulae with the color data in the HGICI format provided in the embodiments of the invention are analytical formulae, and no cumulative errors will occur in the calculations, so the color data obtained by the calculations by the conversion formulae will provide a higher precision of the color data than the conversion formulae in the prior art.

The above contents are only preferred implementation modes of the invention. It should be noted that those skilled in the art can further make some improvements and decorations in the case of not breaking away from the technical principle of the invention, and these improvements and decorations should also be deemed as ones within the scope of protection of the invention.

**Claims**

1. A method for processing color data based on an HGICI color space with a color appearance attribute, comprising:

acquiring color data in an HGICI format in the HGICI color space with a color appearance attribute;
selecting two color data in the HGICI format from the acquired color data in the HGICI format;
performing a color addition and/or color difference operation on the selected two color data in the HGICI format to obain one color data in the HGICI format generated by the operation;
wherein the color space HGICI with a color appearance attribute is a color space based on a CIEXYZ cartesian color space, of a color appearance attribute and described by a cylindrical coordinate system; the cylindrical coordinate system is composed of a chromatic plane and a gray axis passing through the origin of the chromatic plane and perpendicular to the chromatic plane, the gray axis describes a gray level of the color, the chromatic plane is a polar coordinate plane and describes a chromatic vector $\overline{Cl}$ of the color, and the chromatic vector is a vector parallel to the chromatic plane and is composed of a vector polar angle and a vector polar radius expressed within a polar coordinate system, wherein the vector polar angle is a hue angle H of the chromatic vector, and the vector polar radius is a chromatic level Cl of the chromatic vector, i.e., one color C is

$$\text{C is } C=(Gl, \overrightarrow{Cl})=(H, Gl, Cl) \text{ within the HGICI color space with a color appearance attribute;}$$

wherein the chromatic plane is a plane of the CIEXYZ Cartesian color space X+Y+Z=K, and K is a real constant; the axes XYZ of the CIEXYZ Cartesian color space are projected on a plane X+Y+Z=K in a direction of a line X=Y=Z to obtain three projection axes which are at 120° with respect to one another within the chromatic plane, and a unit vector in the direction of the projection axis is $\overrightarrow{i}, \overline{i,j}, \overrightarrow{j}, \overrightarrow{k}; \overline{k};$ the data of the color C (X, Y, Z) in the CIEXYZ color space is expressed as $C\ (X\overrightarrow{i},\ Y\overrightarrow{j},\ Z\overrightarrow{k})$ within the chromatic plane, wherein X, Y and Z are respectively amplitudes in the three directions $\overrightarrow{i}, \overrightarrow{i}, \overrightarrow{j}, \overrightarrow{k},$ and the polar angles $\overrightarrow{i}, \overrightarrow{i}, \overrightarrow{j}, \overrightarrow{k}$ are respectivley 0°, 120° and 240°;
wherein the conversion manner of H, Gl and Cl of the color C and tristimulus values X, Y, Z is given in Formula 1 below:

$$\begin{cases} Gl = Min(X,Y,Z) \\ \overrightarrow{Cl} = X\overrightarrow{i} + Y\overrightarrow{j} + Z\overrightarrow{k} \\ Cl = \left| X\overrightarrow{i} + Y\overrightarrow{j} + Z\overrightarrow{k} \right| \\ H = \begin{cases} \arccos\left( \dfrac{2X - Y - Z}{2\sqrt{(X-Y)^2 + (Y-Z)^2 + (X-Y)(Y-Z)}} \right), & Y \geq Z \\ 2\pi - \arccos\left( \dfrac{2X - Y - Z}{2\sqrt{(X-Y)^2 + (Y-Z)^2 + (X-Y)(Y-Z)}} \right), & Y < Z \\ \text{undefined}, & X = Y = Z \end{cases} \end{cases} \quad \text{(Formula 1)}$$

where Min (X, Y, Z) is adoption of the minimum value of X, Y and Z.

2. The method according to claim 1, wherein the selected two color data in the HGICI format are respectively $C_1=(H_1, Gl_1, Cl_1)$ and $C_2=(H_2, Gl_2, Cl_2)$, the color data in the HGICI format generated by the operation is $C_3=(H_3, Gl_3, Cl_3)$, and performing a color addition operation on the selected two color data in the HGICI format to obtain one color data in the HGICI format generated by the operation comprises:

performing a color addition operation on the two colors $C_1$, $C_2$ to acquire a color $C_3$ after the addition operation by the following steps:

acquiring a gray precipitation value $Gl_{cl1cl2}$ after vector addition of chromatic vectors $\overrightarrow{Cl_1}$ , $\overrightarrow{Cl_2}$ of the two colors $C_1$, $C_2$ by Formula 3:

$$h_1 = \left[\frac{H_1}{120°}\right], \quad h_2 = \left[\frac{H_2}{120°}\right], \quad [\bullet] \text{ is a round symbol with respect to } \bullet, \quad H_1, \quad H_2 \in [0°,360°)$$

$$Gl_{cl_1cl_2} = \begin{cases} 0, & h_1 \wedge h_2 = 0 \\ Gl_{mix}, & h_1 \wedge h_2 = 1 \end{cases}$$

$$Gl_{mix} = \begin{cases} \min(\dfrac{\sin(120°-H_1)}{\sin(60°)}Cl_1, \dfrac{\sin(H_1)}{\sin(60°)}Cl_1 + \dfrac{\sin(240°-H_2)}{\sin(60°)}Cl_2, \dfrac{\sin(H_2-120°)}{\sin(60°)}Cl_2), & h_1 = 0, h_2 = 1; \\ \min(\dfrac{\sin(120°-H_1)}{\sin(60°)}Cl_1 + \dfrac{\sin(H_2-240°)}{\sin(60°)}Cl_2, \dfrac{\sin(H_1)}{\sin(60°)}Cl_1, \dfrac{\sin(360°-H_2)}{\sin(60°)}Cl_2), & h1 = 0, h2 = 2 \\ \min(\dfrac{\sin(H_2-240°)}{\sin(60°)}Cl_2, \dfrac{\sin(240°-H_1)}{\sin(60°)}Cl_1, \dfrac{\sin(H_1-120°)}{\sin(60°)}Cl_1 + \dfrac{\sin(360°-H_2)}{\sin(60°)}Cl_2), & h1 = 1, h2 = 2 \end{cases} \text{(Formula3)};$$

acquiring $H_3$, $Gl_3$, $Cl_3$ in the HGICI format of the color data $C_3$ by Formula 4 and the gray precipitation value $Gl_{cl1cl2}$ after the vector addition of the chromatic vectors $\overrightarrow{Cl_1}$ , $\overrightarrow{Cl_2}$ of the two colors $C_1$, $C_2$:

$$\begin{cases} Gl_3 = Gl_2 + Gl_1 + Gl_{cl_1cl_2} \\ Cl_3 = \sqrt{Cl_1^2 + Cl_2^2 + 2Cl_1 \times Cl_2 \times \cos(H_1 - H_2)} \\ H_3 = \begin{cases} \arccos(\dfrac{Cl_1 \times \cos(H_1) + Cl_2 \times \cos(H_2)}{Cl_3}), & \dfrac{Cl_1 \times \sin(H_1) + Cl_2 \times \sin(H_2)}{Cl_1 \times \cos(H_1) + Cl_2 \times \cos(H_2)} \geq 0 \\ 2\pi - \arccos(\dfrac{Cl_1 \times \cos(H_1) + Cl_2 \times \cos(H_2)}{Cl_3}), & \dfrac{Cl_1 \times \sin(H_1) + Cl_2 \times \sin(H_2)}{Cl_1 \times \cos(H_1) + Cl_2 \times \cos(H_2)} < 0 \end{cases} \end{cases} \text{(Formula 4)}.$$

3. The method according to claim 1, wherein the selected two color data in the HGICI format are respectively $C_4=(H_4, Gl_4, Cl_4)$ and $C_5=(H_5, Gl_5, Cl_5)$, the color data in the HGICI format produced by the operation is $C_6=(H_6, Gl_6, Cl_6)$, and performing a color difference operation on the selected two color data in the HGICI format to obtain one color data in the HGICI format generated by the operation comprises:

acquiring a color difference $C_6=(H_6, Gl_6, Cl_6)$ of the color $C_4=(H_4, Gl_4, Cl_4)$ relative to the color $C_5=(H_5, Gl_5, Cl_5)$ in the HGICI color space by the folowing steps:

acquiring a gray precipitation value $Gl_{cl4cl5}$ after vector addition of chromatic vectors $\overrightarrow{Cl_4}$ , $\overrightarrow{Cl_5}$ of the two colors $C_4$, $C_5$ by Formula 5:

$$h_4 = \left\lceil \frac{H_4}{120°} \right\rceil , \quad h_5 = \left\lceil \frac{H_5}{120°} \right\rceil , \quad [\bullet] \text{ is a round symbol with respect to } \bullet, \quad H_4, \quad H_5 \in [0°, 360°)$$

$$Gl_{cl_4 cl_5} = \begin{cases} Gl_{sd}, & h_4 \wedge h_5 = 0 \\ Gl_{mix}, & h_4 \wedge h_5 = 1 \end{cases}$$

$$Gl_{sd} = \begin{cases} \min(\dfrac{\sin(120° - H_4)}{\sin(60°)} \alpha_4 - \dfrac{\sin(120° - H_5)}{\sin(60°)} \alpha_5, \dfrac{\sin(H_4)}{\sin(60°)} \alpha_4 - \dfrac{\sin(H_5)}{\sin(60°)} \alpha_5, 0), & h_4 = h_5 = 0 \\ \min(0, \dfrac{\sin(240° - H_4)}{\sin(60°)} \alpha_4 - \dfrac{\sin(240° - H_5)}{\sin(60°)} \alpha_5, \dfrac{\sin(H_4 - 120°)}{\sin(60°)} \alpha_4 - \dfrac{\sin(H_5 - 120°)}{\sin(60°)} \alpha_5), & h_4 = h_5 = 1 \\ \min(\dfrac{\sin(H_4 - 240°)}{\sin(60°)} \alpha_4 - \dfrac{\sin(H_5 - 240°)}{\sin(60°)} \alpha_5, 0, \dfrac{\sin(360° - H_4)}{\sin(60°)} \alpha_4 - \dfrac{\sin(360° - H_5)}{\sin(60°)} \alpha_5), & h_4 = h_5 = 2 \end{cases}$$

(Formula 5);

$$Gl_{mix} = \begin{cases} \min(\dfrac{\sin(120° - H_4)}{\sin(60°)} \alpha_4, \dfrac{\sin(H_4)}{\sin(60°)} \alpha_4 - \dfrac{\sin(240° - H_5)}{\sin(60°)} \alpha_5, -\dfrac{\sin(H_5 - 120°)}{\sin(60°)} \alpha_5), & h_4 = 0, h_5 = 1; \\ \min(\dfrac{\sin(120° - H_4)}{\sin(60°)} \alpha_4 - \dfrac{\sin(H_5 - 240°)}{\sin(60°)} \alpha_5, \dfrac{\sin(H_4)}{\sin(60°)} \alpha_4, -\dfrac{\sin(360° - H_5)}{\sin(60°)} \alpha_5), & h_4 = 0, h_5 = 2 \\ \min(-\dfrac{\sin(H_5 - 240°)}{\sin(60°)} \alpha_5, \dfrac{\sin(240° - H_4)}{\sin(60°)} \alpha_4, \dfrac{\sin(H_4 - 120°)}{\sin(60°)} \alpha_4 - \dfrac{\sin(360° - H_5)}{\sin(60°)} \alpha_5), & h_4 = 1, h_5 = 2 \end{cases}$$

acquiring $H_6$, $Gl_6$, $Cl_6$ in the HGICI format of the color data $C_6$ by Formula 6 and the gray precipitation value $Gl_{cl4cl5}$ after the vector addition of the chromatic vectors $\overrightarrow{Cl_4}$, $\overrightarrow{Cl_5}$ of the two colors $C_4$, $C_5$:

$$\begin{cases} Gl_6 = Gl_5 - Gl_4 + Gl_{cl_4 cl_5}, \\ \left| \overrightarrow{Cl_6} \right| = \sqrt{Cl_4^2 + Cl_5^2 - 2Cl_4 \times Cl_5 \times \cos(H_4 - H_5)} \\ H_6 = \begin{cases} \arccos(\dfrac{Cl_4 \times \cos(H_4) - Cl_5 \times \cos(H_5)}{Cl_6}), & \dfrac{Cl_4 \times \sin(H_4) - Cl_5 \times \sin(H_5)}{Cl_4 \times \cos(H_4) - Cl_5 \times \cos(H_5)} \geq 0 \\ 2\pi - \arccos(\dfrac{Cl_4 \times \cos(H_4) - Cl_5 \times \cos(H_5)}{Cl_6}), & \dfrac{Cl_4 \times \sin(H_4) - Cl_5 \times \sin(H_5)}{Cl_4 \times \cos(H_4) - Cl_5 \times \cos(H_5)} < 0 \end{cases} \end{cases}$$

(Formula 6).

4. The method according to claim 1, wherein acquiring color data in an HGICI format in the HGICI color space with a color appearance attribute comprises:

directly specifying a plurality of color data in the HGICI format of interest in the HGICI color space with a color appearance attribute.

5. The method according to claim 1, wherein acquiring color data in an HGICI format in the HGICI color space with a color appearance attribute comprises:

acquiring color data of interest in the CIEXYZ color space;
acquiring color data in the HGICI format corresponding to the color data of interest according to Formula 1, respectively.

**6.** The method according to claim 1, further comprising the step of:

converting the color data in the HGICI format in the HGICI color space with a color appearance attribute into color data in an XYZ format in the CIE XYZ color space by Formula 2 below:

$$h=[\frac{H}{120°}], \quad [\bullet] \text{ is a round symbol with respect to } \bullet, \ H \in [0°, 360°), h=0, 1, 2$$

$$\begin{cases} \text{if } h=0, \\ X = Cl\left[\cos(H)+\frac{\sqrt{3}}{3}\sin(H)\right]+Gl, \\ Y = \frac{2\sqrt{3}}{3}Cl\sin(H)+Gl, \\ Z = Gl \end{cases} \begin{cases} \text{if } h=1, \\ X = Gl \\ Y = Gl - Cl\cos(H)+\frac{\sqrt{3}}{3}\left|\vec{Cl}\right|\times\sin(H), \\ Z = Gl - Cl\cos(H)-\frac{\sqrt{3}}{3}\left|\vec{Cl}\right|\times\sin(H) \end{cases} \begin{cases} \text{if } h=2 \\ X = Cl\left[\cos(H)-\frac{\sqrt{3}}{3}\sin(H)\right]+Gl \\ Y = Gl \\ Z = Gl - \frac{2\sqrt{3}Cl\sin(H)}{3} \end{cases} \quad \text{(Formula 2)}.$$

**7.** A method for processing color data based on an HGICI color space with a color appearance attribute, comprising:

acquiring color data in an XYZ format of interest in a CIE XYZ color space;
converting the acquired color data in the XYZ format into color data in a HGICI format according to Formula 1 below;
wherein the color space HGICI with a color appearance attribute is a color space based on a CIEXYZ Cartesian color space, of a color appearance attribute and described by a cylindrical coordinate system; the cylindrical coordinate system is composed of a chromatic plane and a gray axis passing through the origin of the chromatic plane and perpendicular to the chromatic plane, the gray axis describes a gray level of the color, the chromatic plane is a polar coordinate plane and describes a chromatic vector $\overline{Cl}$ of the color, and the chromatic vector is a vector parallel to the chromatic plane and is composed of a vector polar angle and a vector polar radius expressed within a polar coordinate system, wherein the vector polar angle is a hue angle H of the chromatic vector, and the vector polar radius is a chromatic level Cl of the chromatic vector, i.e., one color C is C=(Gl, $\overline{Cl}$)=(H, Gl, Cl) within the HGICI color space with a color appearance attribute;
wherein the chromatic plane is a plane of the CIEXYZ Cartesian color space X+Y+Z=K, and K is a real constant;
the axes XYZ of the CIEXYZ Cartesian color space are projected on a plane X+Y+Z=K in a direction of a line X=Y=Z to obtain three projection axes which are at 120° with respect to one another within the chromatic plane, and a unit vector in the direction of the projection axis is $\vec{i}, \overline{i,j}, \ \vec{j}, \ \vec{k}$; the data of the color C (X, Y, Z) in the CIEXYZ color space within the chromatic plane is expressed as C ($X\vec{i}, \ Y\vec{j}, \ Z\vec{k}$), $Z\vec{k}$), wherein X, Y and Z are respectively amplitudes in the three directions $\vec{i}, \ \vec{j}, \ \vec{k}$, and the polar angles $\vec{i}, \overline{i,j}, \ \vec{j}, \ \vec{k}$ are respectivley 0°, 120° and 240°;

$$\begin{cases} Gl = Min(X,Y,Z) \\ \overline{Cl} = X\vec{i} + Y\vec{j} + Z\vec{k} \\ Cl = \left| X\vec{i} + Y\vec{j} + Z\vec{k} \right| \\ H = \begin{cases} \arccos\left(\dfrac{2X - Y - Z}{2\sqrt{(X-Y)^2 + (Y-Z)^2 + (X-Y)(Y-Z)}}\right), & Y \geq Z \\ 2\pi - \arccos\left(\dfrac{2X - Y - Z}{2\sqrt{(X-Y)^2 + (Y-Z)^2 + (X-Y)(Y-Z)}}\right), & Y < Z \\ \text{undefined}, & X = Y = Z \end{cases} \end{cases} \quad \text{(Formula 1)}$$

in the formula, Min (X, Y, Z) is the minimum value of X, Y and Z.

8. A method for processing color data based on an HGICl color space with a color appearance attribute, comprising:

acquiring color data in an HGICl format of interest in the HGICl color space;
converting the acquired color data in the HGICl format into color data in an XYZ format in a CIE XYZ color space according to Formula 2:

$$h = \left[\frac{H}{120°}\right], \quad [\bullet] \text{ is a round symbol with respect to } \bullet, \quad H \in [0°, 360°), \quad h=0, 1, 2$$

$$\begin{cases} \text{if } h=0, \\ X = Cl\left[\cos(H) + \dfrac{\sqrt{3}}{3}\sin(H)\right] + Gl, \\ Y = \dfrac{2\sqrt{3}}{3}Cl\sin(H) + Gl, \\ Z = Gl \end{cases} \quad \begin{cases} \text{if } h=1, \\ X = Gl \\ Y = Gl - Cl\cos(H) + \dfrac{\sqrt{3}}{3}\left|\overline{Cl}\right| \times \sin(H), \\ Z = Gl - Cl\cos(H) - \dfrac{\sqrt{3}}{3}\left|\overline{Cl}\right| \times \sin(H) \end{cases} \quad \begin{cases} \text{if } h=2 \\ X = Cl\left[\cos(H) - \dfrac{\sqrt{3}}{3}\sin(H)\right] + Gl \\ Y = Gl \\ Z = Gl - \dfrac{2\sqrt{3}Cl\sin(H)}{3} \end{cases} \quad \text{(Formula 2)}$$

wherein the color space HGICl with a color appearance attribute is a color space based on a CIE XYZ Cartesian color space, of a color appearance attribute and described by a cylindrical coordinate system; the cylindrical coordinate system is composed of a chromatic plane and a gray axis passing through the origin of the chromatic plane and perpendicular to the chromatic plane, the gray axis describes a gray level of the color, the chromatic plane is a polar coordinate plane and describes a chromatic vector $\overline{Cl}$ of the color, and the chromatic vector is a vector parallel to the chromatic plane and is composed of a vector polar angle and a vector polar radius expressed within a polar coordinate system, wherein the vector polar angle is a hue angle H of the chromatic vector, and the vector polar radius is a chromatic level Cl of the chromatic vector, i.e., one color C is

$$C = (Gl, \overrightarrow{Cl}) = (H, Gl, Cl) \quad \text{within the HGICl color space with a color appearance attribute;}$$

wherein the chromatic plane is a plane of the CIEXYZ Cartesian color space X+Y+Z=K, and K is a real constant; the axes XYZ of the CIEXYZ Cartesian color space are projected on a plane X+Y+Z=K in a direction of a line X=Y=Z to obtain three projection axes which are at 120° with respect to one another within the chromatic plane, and a unit vector in the direction of the projection axis is $\vec{i}, \overline{i,j}, \vec{j}, \vec{k}; \overline{k}$; the data of the color C (X, Y, Z) in the CIEXYZ color space within the chromatic plane is expressed as $C(X\vec{i}, Y\vec{j}, Z\vec{k}), Z\vec{k})$, wherein X, Y and Z are respectively amplitudes in the three directions $\vec{i}, \overline{i}, \vec{j}, \vec{k}$, and the polar angles $\vec{i}, \overline{i,j}, \vec{j}, \vec{k}$ are respectivley 0°, 120° and 240°;

definitions of H, Gl and Cl of the color C are given in Formula 1:

$$\begin{cases} GI = Min(X,Y,Z) \\ \overline{CI} = X\overline{i} + Y\overline{j} + Z\overline{k} \\ CI = \left| X\overline{i} + Y\overline{j} + Z\overline{k} \right| \\ H = \begin{cases} \arccos\left( \dfrac{2X - Y - Z}{2\sqrt{(X-Y)^2 + (Y-Z)^2 + (X-Y)(Y-Z)}} \right), & Y \geq Z \\ 2\pi - \arccos\left( \dfrac{2X - Y - Z}{2\sqrt{(X-Y)^2 + (Y-Z)^2 + (X-Y)(Y-Z)}} \right), & Y < Z \\ \text{undefined}, & X = Y = Z \end{cases} \end{cases} \qquad \text{(Formula 1)}$$

in the formula, Min (X, Y, Z) is the minimum value of X, Y and Z.

9.  The method according to claim 8, wherein acquiring color data in an HGICI format of interest in the HGICI color space comprises:

    directly selecting color data of interest in the HGICI color space;
    or acquiring the color data in the HGICI format by the method according to claim 7.

Fig. 1

Fig. 2

Fig. 3

Fig. 4

45°

Cl

Gl

Fig. 5

| begin | Step 600 |

| Acquiring color data in an HGlCl format in the HGlCl color space of a color appearance attribute | Step 602 |

| Selecting two color data of arbitrary colors in the HGlCl format from the acquired color data in the HGlCl format | Step 604 |

| Performing a color addition/color difference operation on selected two color data to acquire one color data in the HGlCl format | Step 606 |

Fig. 6

Acquiring color data
of interest in the
CIEXYZ color space

Step
702

Acquiring color data in
HGlC1 format
corresponding to color
data of interest
according to Formula 1

Step
704

Fig.7

# INTERNATIONAL SEARCH REPORT

| International application No. |
| --- |
| PCT/CN2012/080661 |

**A.  CLASSIFICATION OF SUBJECT MATTER**

See the extra sheet

According to International Patent Classification (IPC) or to both national classification and IPC

**B.    FIELDS SEARCHED**

Minimum documentation searched (classification system followed by classification symbols)

IPC: H04N, G06T, G01N, D06H

Documentation searched other than minimum documentation to the extent that such documents are included in the fields searched

Electronic data base consulted during the international search (name of data base and, where practicable, search terms used)

Database: WPI, EPODOC, CPRS, CNKI; Keywords: HGlCl, CIE, XYZ, color appearance, color space, ansys global cylindrical, cylindrical coordinates, conversion, converting, color difference, color overlay, hue angle

**C.    DOCUMENTS CONSIDERED TO BE RELEVANT**

| Category* | Citation of document, with indication, where appropriate, of the relevant passages | Relevant to claim No. |
| --- | --- | --- |
| A | CN1673743A (CHANGCHUN INSTITUTE OF OPTICS, FINE MECHANICS AND PHYSICS, CAS) 28 Sep. 2005 (28.09.2005) the whole document | 1-9 |
| A | CN101100807A (QINGDAO ENTRY EXIT INSPECTION AND QUARANTINE BUREAU OF PRC) 09 Jan. 2008(09.01.2008) the whole document | 1-9 |
| A | CN101478698A (SAMSUNG SDI CO LTD) 08 Jul. 2009(08.07.2009) the whole document | 1-9 |
| A | JP2004145198A (DAINIPPON INK & CHEM INC) 20 May 2004(20.05.2004) the whole document | 1-9 |
| A | WANG Lixia, Color Difference Evaluation based on Image Color Appearance Model, Guangdong Printing, 31 Dec.2009, No.6, pages 17-19, the whole document | 1-9 |

☐ Further documents are listed in the continuation of Box C.        ☒ See patent family annex.

| | |
| --- | --- |
| *     Special categories of cited documents:<br><br>"A"  document defining the general state of the art which is not considered to be of particular relevance<br><br>"E"  earlier application or patent but published on or after the international filing date<br><br>"L"  document which may throw doubts on priority claim(s) or which is cited to establish the publication date of another citation or other special reason (as specified)<br><br>"O"  document referring to an oral disclosure, use, exhibition or other means<br><br>"P"  document published prior to the international filing date but later than the priority date claimed | "T"  later document published after the international filing date or priority date and not in conflict with the application but cited to understand the principle or theory underlying the invention<br><br>"X"  document of particular relevance; the claimed invention cannot be considered novel or cannot be considered to involve an inventive step when the document is taken alone<br><br>"Y"  document of particular relevance; the claimed invention cannot be considered to involve an inventive step when the document is combined with one or more other such documents, such combination being obvious to a person skilled in the art<br><br>"&"document member of the same patent family |
| Date of the actual completion of the international search<br><br>09 Nov. 2012 (09.11.2012) | Date of mailing of the international search report<br><br>13 Dec. 2012 (13.12.2012) |
| Name and mailing address of the ISA<br>State Intellectual Property Office of the P. R. China<br>No. 6, Xitucheng Road, Jimenqiao<br>Haidian District, Beijing 100088, China<br>Facsimile No. (86-10)62019451 | Authorized officer<br><br>TIAN, Lina<br><br>Telephone No. (86-10)62412072 |

Form PCT/ISA /210 (second sheet) (July 2009)

## INTERNATIONAL SEARCH REPORT
### Information on patent family members

International application No.

PCT/CN2012/080661

| Patent Documents referred in the Report | Publication Date | Patent Family | Publication Date |
|---|---|---|---|
| CN1673743A | 28.09.2005 | None | |
| CN101100807A | 09.01.2008 | CN101100807B | 11.05.2011 |
| CN101478698A | 08.07.2009 | KR20090069681A | 01.07.2009 |
| | | US2009169098A1 | 02.07.2009 |
| | | JP2009159580A | 16.07.2009 |
| JP2004145198A | 20.05.2004 | None | |

Form PCT/ISA /210 (patent family annex) (July 2009)

## INTERNATIONAL SEARCH REPORT

| International application No. |
|---|
| PCT/CN2012/080661 |

Continuation of : A.   CLASSIFICATION OF SUBJECT MATTER

H04N1/56 (2006.01) i

H04N1/60 (2006.01) i

Form PCT/ISA /210 (extra sheet) (July 2009)